# NEUE EUROPÄISCHE PATENTSCHRIFT

(11) **EP 1 017 533 B2**
(45) Veröffentlichungstag und Bekanntmachung des Hinweises auf die Entscheidung über den Einspruch: **25.05.2011**
(45) Hinweis auf die Patenterteilung: 04.02.2004
(21) Anmeldenummer: 98945061.4
(22) Anmeldetag: 29.07.1998
(51) Int. Cl.: B23Q 1/01

(54) **WERKZEUGMASCHINE**
MACHINE-TOOL
MACHINE-OUTIL

(30) Priorität: 29.07.1997 DE 19732608
(43) Veröffentlichungstag der Anmeldung: 12.07.2000
(73) Patentinhaber: Ex-Cell-O GmbH, 73054 Eislingen/Fils (DE)
(72) Erfinder: STAIGER, Hans, D-73033 Göppingen (DE)
(74) Vertreter: Hoeger, Stellrecht & Partner Patentanwälte
(86) Internationale Anmeldenummer: PCT/DE1998/002159
(87) Internationale Veröffentlichungsnummer: WO 1999/006176

(56) Entgegenhaltungen:
- EP-A- 0 614 724
- EP-A- 0 742 072
- EP-A- 0 816 012
- EP-A- 0 913 288
- JP-A- 6 091 457
- US-A- 4 955 770
- US-A- 5 181 898

## Beschreibung

Die Erfindung betrifft eine Werkzeugmaschine mit einem auf einem Maschinenbett verschiebbar geführten Werkstückträger gemäß dem Oberbegriff des Patentanspruchs 1.

Eine derartige Werkzeugmaschine ist aus der JP 06091457 A bekannt.

Üblicherweise werden bei der spanabhebenden Bearbeitung von Werkstücken Kühlschmiermittel zugeführt, um einerseits die Standfestigkeit des Werkzeuges durch Kühlung und Schmierung zu erhöhen und andererseits die durch den Zerspanungsprozeß in das Werkstück und in das Werkzeug eingebrachte Wärme sowie die anfallenden Späne möglichst schnell von der Bearbeitungsstelle abzuführen.

In der Automobilindustrie ist man dazu übergegangen, Motor-, Fahrwerks- oder Karosseriekomponenten aus Leichtmetallen, vorzugsweise aus Aluminium- oder Magnesiumlegierungen zu verwenden. Die Verarbeitung derartiger magnesiumhaltiger Legierungen ist jedoch relativ problematisch, da die anfallenden Bearbeitungsspäne leicht entflammbar sind, so daß ein verhältnismäßig hoher Aufwand zur Wahrung der erforderlichen Produktionssicherheit betrieben werden muß. Die Verwendung von Kühlschmiermitteln auf der Grundlage wasserhaltiger Basen ist nicht möglich, da Magnesium mit diesen Komponenten reagiert, so daß ölhaltige Kühlschmiermittel verwendet werden müssen. Derartige ölhaltige Kühlschmiermittel haften jedoch häufig an dem zu bearbeitenden Werkstück, so daß dieses nach der spanabhebenden Bearbeitung mit geeigneten Reinigungsmitteln gereinigt werden muß. Die zur Kühlung und Reinigung verwendeten Mittel müssen im Anschluß an den Bearbeitungs-/Reinigungszyklus entsorgt oder aufgetrennt werden, was mit einem relativ hohen Aufwand verbunden ist.

Um diese Nachteile zu überwinden, geht man in zunehmendem Maße dazu über, die Werkstücke trocken, d.h. ohne Kühlschmiermittel, zu bearbeiten. Wesentlich bei dieser Bearbeitung ist, daß die Bearbeitungsspäne während des Zerspanungsprozesses möglichst schnell vom Werkstück wegtransportiert und auf kleinstem Raum gehalten werden. Um dies zu gewährleisten, werden die zur Trockenbearbeitung eingesetzten Werkzeugmaschinen mit geschlossenen Bearbeitungskammer ausgerüstet, in der sich das zu bearbeitende Werkstück befindet und in die die Arbeitsspindel der Werkzeugmaschine eintaucht.

In besonderen Fällen kann die Zerspanung in der Bearbeitungskammer noch unter Inertgas erfolgen, so daß die Betriebssicherheit erhöht ist.

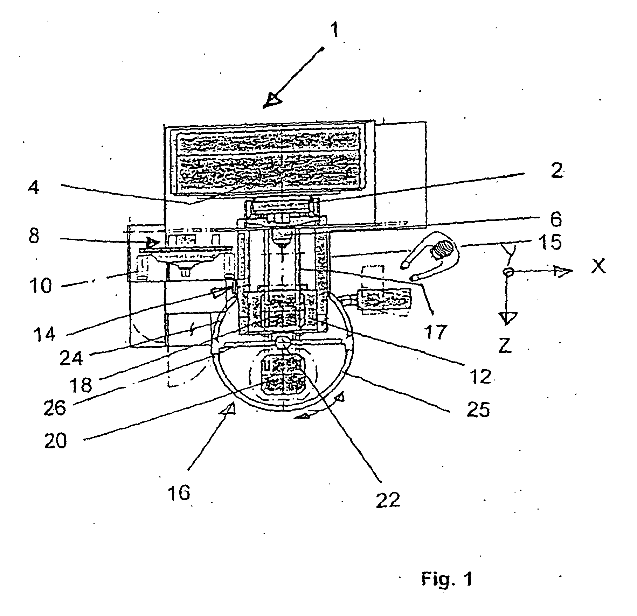

Fig. 1, auf die bereits jetzt Bezug genommen sei, zeigt eine Draufsicht auf ein Bearbeitungszentrum 1, bei dem ein in X- und Y-Richtung (senkrecht zur Zeichenebene) bewegbarer Spindelträger 2 über eine Kreuzführung an einem Ständer 4 geführt ist. Der Spindelträger 2 trägt eine horizontale Arbeitsspindel 6 zur Aufnahme eines Bearbeitungswerkzeuges.

Das Bearbeitungszentrum 1 hat desweiteren einen Werkzeugwechsler, der beispielsweise als seitlich angeordnetes Trommelmagazin 8 ausgebildet sein kann, in dem die der Arbeitsspindel 6 zuzuführenden Werkzeuge 10 aufgenommen sind.

Ein Werkstückträger (Tisch) 12 des Bearbeitungszentrums 1 ist in Vorschubrichtung (Z) verfahrbar auf einem nicht gezeigten Maschinenbett gelagert. Der Werkstückträger 12 und die Arbeitsspindel 6 sind von einer Bearbeitungskammer 14 umgeben, so daß eine Trockenbearbeitung ermöglicht ist. Zur Verringerung der Span-zu-Span-Zeiten ist dem Werkstückträger 12 ein Palettenwechsler 16 zugeordnet, bei dem zwei Paletten 18, 20 auf einer Schwenkeinrichtung 22 gelagert sind.

Der Palettenwechsler 16 trägt eine Schwenktüre 26, im folgenden Trennwandung 26 genannt, die nach oben und nach unten (parallel zur Zeichenebene) verschlossen ist. Die Schwenktüre 26 bildet gemeinsam mit den Seitenwandungen 15 und kreisbogenförmig gekrümmten Umfangswandungen 24 der Bearbeitungskammer 14 eine Vollkapselung des Arbeitsbereichs, die eine Naß- und Trockenbearbeitung erlaubt. Der Palettenwechsler 16 hat desweiteren eine kreisbogenförmige Schiebetüre 25, die als Bedienschutz beim Palettenwechsel dient und gemeinsam mit der Umfangswandung 24 die Paletten 18, 20 umgibt.

Wie aus Fig. 1 hervorgeht, umgibt die Bearbeitungskammer den gesamten Werkstückträger 12 mit der sich darauf in der Bearbeitungsposition befindlichen Palette 18 und überdeckt auch die auf dem Maschinenbett ausgebildete Linearführung 17 für den Werkstückträger 12 (Werkstücktisch).

Eine Werkzeugmaschine in Fahrständerbauweise ist in der US 5 181 898 offenbart.

Wie bereits eingangs erwähnt wurde, müssen bei der Trockenbearbeitung von Werkstücken die Späne möglichst schnell aus der Bearbeitungskammer entfernt werden, um die Gefahr einer Entflammung zu vermeiden und auch eine ordnungsgemäße Funktion des Bearbeitungszentrums zu gewährleisten, da beispielsweise die genannten Linearführungen durch abgelagerte Späne verschlissen werden können. Gerade im Bereich der Linearführung wird die Späneabfuhr erschwert, da die vergleichsweise komplex aufgebauten Führungsquerschnitte - beispielsweise Schwalbenschwanzführungen - Toträume bilden können, in denen sich Späne ansammeln. Bei der Naßbearbeitung ist dieses Problem von untergeordneter Bedeutung, da das Kühlschmiermittel die Späne aus dem Bearbeitungsbereich herausspült.

Demgegenüber liegt der Erfindung die Aufgabe zugrunde, eine Werkzeugmaschine zu schaffen, bei der auch bei einer Trockenbearbeitung die Späneabfuhr erleichtert ist.

Diese Maßnahme wird durch eine Werkzeugmaschine mit den Merkmalen des Patentanspruchs 1 gelöst.

Durch die Maßnahme, die Führung des Werkstückträgers außerhalb der Bearbeitungskammer anzuordnen, ist eine unerwünschte Ablagerung von Spänen im Führungsbereich ausgeschlossen, so daß der Verschleiß der Führungen durch derartige Spanablagerungen zuverlässig verhindert werden kann. Ein weiterer Vorteil liegt darin, daß die Führungen außerhalb der Bearbeitungskammer frei zugänglich sind und somit auf einfache Weise überprüft und gewartet werden können. Da bei der erfindungsgemäßen Maschine sowohl die Antriebe des Werkstückträgers als auch dessen Führungen außerhalb der Bearbeitungskammer angeordnet werden können, müssen keine geeigneten Abdeckungseinrichtungen vorgesehen werden, über die die Antriebe von den Führungsabschnitten des Werkstückträgers getrennt sind.

Dies wird dadurch ermöglicht, dass der Werkstückträger mit zumindest zwei quer zur Führungsrichtung beidseitig auskragenden Tragarmen ausgebildet ist, denen jeweils eine Führung zur Auflage auf dem Maschinenbett zugeordnet ist, wobei jeder Führung ein eigener Antriebsmotor für den Werkstückträger zugeordnet ist.

Zur Durchführung der Tragarme sind in der Wandung der Bearbeitungskammer Ausnehmungen ausgebildet, die durch geeignete bewegbare Abdeckungen während der Vorschubbewegung abgedichtet sind, so daß eine Vollkapselung des Bearbeitungsbereichs gewährleistet ist.

Diese Abdeckeinrichtungen können beispielsweise Schiebebleche oder andere Teleskopbleche oder -platten sein, die am in Vorschubrichtung bewegbaren Werkstückträger befestigt sind und an den benachbarten Wandungen der Bearbeitungskammer dichtend gleiten.

Bei einer besonders bevorzugten Variante ist das Maschinenbett aus zwei im Abstand zueinander stehenden Bettkörpern gebildet, wobei auf jedem der Bettkörper einer der vorgenannten Tragarme geführt ist.

Im Bereich zwischen den beiden Bettkörpern ist eine Spanabführung ausgebildet, über die die Späne aus der zwischen den beiden Führungen angeordneten Bearbeitungskammer abführbar sind.

Zur Aussteifung des Maschinenbettes werden die beiden Bettkörper vorteilhafterweise über geeignete Verbindungsoder Aussteifungsrippen und/oder eine gemeinsame Grundplatte gekoppelt.

Die mit Spänen beaufschlagten Wandungsbereiche der Bearbeitungskammer sind mit einem Neigungswinkel zur Horizontalen von mindestens 50° ausgeführt, so daß die Späne entlang der Umfangswandungen der Bearbeitungskammer zur Spanabführung hin abgleiten.

Letztere wird bevorzugterweise als Späneförderer (beispielsweise mit Ketten gezogene Kratzbleche) ausgeführt.

Falls die Werkzeugmaschine als Hochgeschwindigkeitsbearbeitüngszentrum eingesetzt werden soll, werden die Antriebsmotoren vorteilhafterweise als Linearantriebe ausgeführt, so daß keine mechanischen Übertragungsglieder zur Umsetzung der Drehbewegung eines Antriebsmotors auf eine Linearbewegung des Werkstückträgers erforderlich sind.

Sonstige vorteilhafte Weiterbildungen der Erfindung sind Gegenstand der weiteren Unteransprüche.

Im folgenden wird ein bevorzugtes Ausführungsbeispiel der Erfindung anhand schematischer Zeichnungen näher erläutert. Es zeigen:
Fig. 1 eine Draufsicht auf ein bekanntes Bearbeitungszentrum zur Trockenbearbeitung von Werkstücken;
Fig. 2 eine schematische Darstellung eines erfindungsgemäßen, von einer Bearbeitungskammer umgebenen Werkstückträgers; und
Fig. 3 eine Detaildarstellung einer Führung des Werkstückträgers aus Fig . 2.

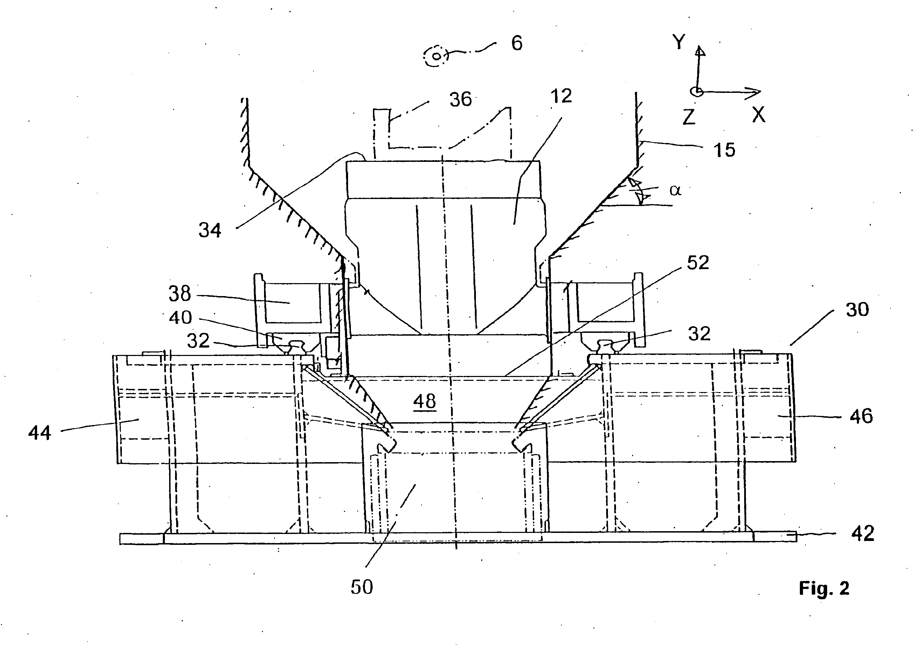

Fig. 2 zeigt eine Vorderansicht auf ein erfindungsgemäßes Bearbeitungszentrum 1, das in Ständerbauweise ausgeführt ist, wobei gemäß Fig. 1 der Ständer 4 (Fig. 1) auf einem Maschinenbett 30 gelagert ist. Wie eingangs ausgeführt, ist ein Spindelträger oder Spindelkasten 2 in X- und Y-Richtung verschiebbar auf dem Ständer 4 geführt, wobei der Antrieb entlang der X-/Y-Richtung-Führungen durch nicht dargestellte Linearmotoren erfolgt. Der Werkstückträger 12, auf dem wechselweise die Paletten 18, 20 festspannbar sind, ist über zwei im Parallelabstand zueinander verlaufende Führungen 32 auf dem Maschinenbett 30 geführt, so daß er senkrecht zur Zeichenebene in Fig. 2, d.h. in Z-Richtung verschiebbar ist. Der Werkstückträger 12 hat eine Aufspannfläche 34 und nicht dargestellte Spannmittel zum Spannen einer über den Palettenwechsler 16 zugeführten Palette, auf der das zu bearbeitende Werkstück 36 (strichpunktiert angedeutet in Fig. 2) festgespannt ist.

An seinem in Fig. 2 unteren Endabschnitt hat der Werkstückträger 12 zwei oder mehrere beidseitig auskragende Tragarme 38, an denen Führungswagen 40 befestigt sind, die auf den Führungen 32 verschiebbar sind. Die Führungen werden bevorzugt als spielfreie wälzführungen ausgeführt.

Beim gezeigten Ausführungsbeispiel erfolgt die Vorschubbewegung des Werkstückträgers über zwei Linearantriebe, wobei ein Linearantrieb jeweils einer Führung 32 zugeordnet ist, so daß eine synchrone Ansteuerung beider Linearmotoren erforderlich ist, um den Vorschub zu bewirken. Derartige translatorische Direktantriebe mit Linearmotoren bieten dynamische Verfahrbewegungen und genaueste Positionierungen. Die Schubkräfte wirken direkt - ohne Spiel, ohne Elastizität und ohne Verschleiß. Durch die Montage des Motors direkt am beweglichen Führungswagen entsteht ein wesentlich vereinfachter Regelkreis.

Das Maschinenbett 30 hat eine gemeinsame Grundplatte 42, auf der sich zwei Bettkörper 44, 46 befinden. Der Freiraum zwischen den Bettkörpern 44, 46 bildet im Bereich unterhalb des Werkstückträgers einen Abführraum 48, durch den hindurch Späne zu einem strichpunktiert angedeuteten Späneförderer 50 geführt werden. Über diesen werden die anfallenden Späne senkrecht zur Zeichenebene (Fig. 2) zu einem Sammelbehälter abgeführt. Der Späneförderer kann beispielsweise mit nicht dargestellten Kratzblechen versehen werden, die über eine umlaufende Kette gezogen werden.

Zur Aussteifung des Maschinenbettes sind die beiden Bettkörper 44, 46 über Verbindungsrippen 52 verbunden, die den Abführraum 48 durchstrecken. Die Fläche der Verbindungsrippen 52 ist jedoch gegenüber der wirksamen Fläche des Abführraumes 48 vergleichsweise gering, so daß die Verbindungsrippen 52 praktisch keinerlei Staukörper für die Späne ausbilden. Die Verbindungsrippen 52 können auch außerhalb des Verfahrbereichs des Vorschubtisches 12 angeordnet sein, so daß sie nicht in Wechselwirkung mit herabfallenden Spänen treten.

Die Bearbeitungskammer (Bezugszeichen 14 in Fig. 1) bildet einen gekapselten Bearbeitungsraum, in den die Arbeitsspindel 6 (Fig. 1) eintaucht und in dem der Werkstückträger 12, und der werkstückträgerseitige Teil des Palettenwechslers 16 angeordnet sind. Die Förderfläche des Späneförderers 50 bildet praktisch die untere Begrenzung der Bearbeitungskammer.

Wie aus Fig. 2 hervorgeht, laufen die Seitenwandungen 15 der Bearbeitungskammer schräg nach unten, hin zum Späneförderer 50 stufenförmig konisch zu, wobei der minimale Konuswinkel α etwa 50° beträgt.

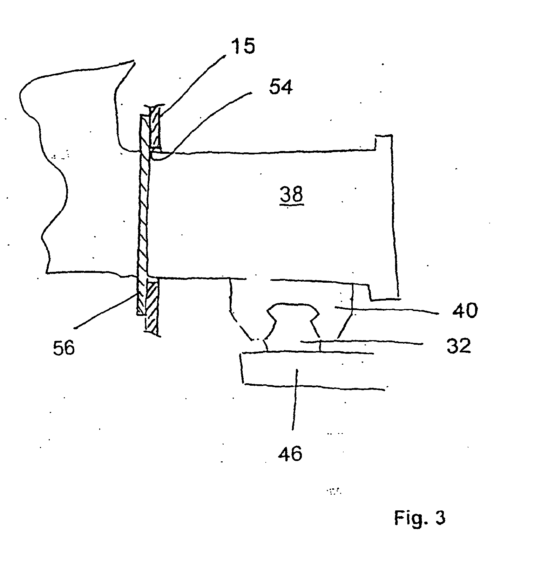

Im Bereich der Tragarme 38 sind in den Seitenwandungen 15 Ausnehmungen 54 ausgebildet, die sich senkrecht zur Zeichenebene der Figuren 2 oder 3 erstrecken. Die letztgenannte Figur zeigt eine Detaildarstellung des in Fig. 2 rechten Tragarmes 38, der über das Führungswagen 40 auf der Schwalbenschwanzführung 32 geführt ist. Demgemäß durchsetzt der Tragarm 38 die Ausnehmung 54, deren Länge (senkrecht zur Zeichenebene in Fig. 3) zumindest gleich dem maximalen Verfahrbereich des Werkstückträgers 12 ist. Der Spalt zwischen dem Außenumfang des Tragarms 38 und der Innenumfangsfläche der Ausnehmung 54 wird über ein Schiebeblech 56 abgedeckt, das gleitend an der benachbarten Großfläche der Seitenwandung 15 anliegt und am Tragarm 38 befestigt ist. Das Schiebeblech 56 kann beispielsweise mehrteilig aus teleskopierbaren Gleitblechen gebildet sein. Selbstverständlich sind auch andere Konstruktionsvarianten zur Abdeckung des Ringspaltes zwischen Tragarm 38 und Umfangswandung der Ausnehmung 54 möglich. Wichtig ist, daß die Abdichtung so gut ist; daß Späne nicht aus diesem Bereich heraustreten können und daß beim Einsatz von Inertgas keine übermäßigen Inertgasverluste auftreten.

Der sich nach unten hin an den Durchführungsabschnitt der Tragarme 38 anschließende Teil der Seitenwandung 15 ist wieder um den Winkel α geneigt zur Horizontalen angeordnet, so daß die Späne entlang dieser Fläche zum Späneförderer 50 hin abrutschen.

Bei dieser Variante sind die Führungen 32 außerhalb des Bearbeitungsraumes angeordnet, so daß diese nicht in Wechselwirkung mit den Bearbeitungsspänen treten können. Entsprechend sind auch die auf die Führungswagen 40 wirkenden Linearantriebe außerhalb der Bearbeitungskammer angeordnet.

Die stirnseitige Abdeckung wird im Bereich der Arbeitsspindel 6 durch die Stirnwandung des Ständers 4 gebildet, während die gegenüberliegende, palettenwechslerseitige Abdeckung durch die Trennwandung 26 (Palettentür) gebildet wird. Der obere Abschluß wird durch ein Kabinendach gebildet, während der untere Abschluß der Bearbeitungskammer 14 durch einen Kabinenboden und den Späneförderer 50 gebildet ist, der noch mit einer Schleuse zur Abführung der Späne aus der Bearbeitungskammer 14 versehen sein kann.

Zur Verringerung des Maschinengewichtes sind der Werkstückträger 12 und das Maschinenbett 30 in Leichtbauweise mit Verstärkungsrippen ausgeführt, auf die hier jedoch nicht eingegangen wird, da diese für die Erfindung von untergeordneter Bedeutung sind.

Wesentlich bei der Erfindung ist, daß durch die erfindungsgemäße Anordnung der Werkstückträgerführung ein Abführraum 48 für die Späne geschaffen wird, in dem praktisch keine Hindernisse, Toträume o.ä. für die Späne angeordnet sind, so daß die Spanabfuhr schnellstmöglich und ohne großen Aufwand erfolgen kann. Die Seitenwandungen 15 der Bearbeitungskammer sind glattflächig ausgebildet, so daß die Späne aufgrund ihres Eigengewichtes zum Späneförderer 50 hin abrutschen können.

Offenbart ist eine Werkzeugmaschine zur Trockenbearbeitung mit einem gekapselten Arbeitsraum, in dem ein Werkstückträger angeordnet ist, der auf einem Maschinenbett verschiebbar ist. Die Führungen des Werkstückträgers sind außerhalb des Arbeitsraumes angeordnet, so daß die Späneabfuhr durch die Führungen des Werkstückträgers nicht behindert ist.

## Patentansprüche

1. Werkzeugmaschine zur Bearbeitung eines Werkstückes (36), das mittelbar oder unmittelbar auf einem Werkstückträger (12) aufgespannt ist, der verschiebbar auf einem Maschinenbett (30) geführt und von einer einen Arbeitsraum begrenzenden Bearbeitungskammer (14) umgeben ist, aus der heraus Späne mittels einer Spanabfuhreinrichtung (50) herausführbar sind, wobei die Führung (32, 40) des Werkstückträgers (12) außerhalb der Bearbeitungskammer (14) angeordnet ist, **dadurch gekennzeichnet, dass** zumindest zwei quer zur Führungsrichtung (Z) beidseitig auskragende Tragarme (38) des Werkstückträgers (12) jeweils eine Seitenwandung (15) der Bearbeitungskammer (14) durchsetzen, wobei jeder Führung (32) ein Antriebsmotor zugeordnet ist, der außerhalb der Bearbeitungskammer (14) angeordnet ist.

2. Werkzeugmaschine nach Patentanspruch 1, **dadurch gekennzeichnet, dass** die Bearbeitungskammer (14) im Bereich der Durchführungen für die Tragarme (38) Ausnehmungen (54) hat, die durch am Werkstückträger (12) angeordnete Abdeckeinrichtungen (56) abgedeckt sind.

3. Werkzeugmaschine nach Patentanspruch 2, **dadurch gekennzeichnet, dass** die Abdeckeinrichtungen Schiebebleche (56) sind.

4. Werkzeugmaschine nach einem der Patentansprüche 1 bis 3, **dadurch gekennzeichnet, dass** das Maschinenbett (30) zwei im Abstand zueinander stehende Bettkörper (44, 46) hat, zwischen denen ein Abführraum (48) für Späne ausgebildet ist, und wobei jeweils eine Führung (32) auf einem der Bettkörper (44, 46) befestigt ist, so dass der Werkstückträger (12) den Abführraum (48) überbrückt.

5. Werkzeugmaschine nach Patentanspruch 4, **dadurch gekennzeichnet, dass** die beiden Bettkörper (44, 46) über eine gemeinsame Grundplatte (42) und/oder Verbindungsrippen (52) miteinander verbunden sind.

6. Werkzeugmaschine nach einem der Patentansprüche 1 bis 3 und 4 oder 5, **gekennzeichnet durch** geneigte Seitenwandungen, die sich von der Abdeckeinrichtung (56) hin zur Spanabführung (50) erstrecken.

7. Werkzeugmaschine nach einem der Patentansprüche 4 bis 6, **dadurch gekennzeichnet, dass** die Spanabführung ein mechanischer Späneförderer (50) ist.

8. Werkzeugmaschine nach einem der vorhergehenden Patentansprüche, **dadurch gekennzeichnet, dass** der Neigungswinkel (α) der die Bearbeitungskammer (14) begrenzenden Seitenwandungen (15) zumindest 50° beträgt.

9. Werkzeugmaschine nach einem der Patentansprüche 1 bis 8, **dadurch gekennzeichnet, dass** die Antriebsmotoren als Linearantriebe ausgeführt sind.

## Claims

1. A machining tool for processing of a workpiece (36) indirectly or directly mounted on a workpiece support (12) which is displaceably guided on a machine bed (30) and enclosed by a processing chamber (14) delimiting a workspace from which chips may be discharged with the aid of chip removal means (50), wherein the guide mechanism (32, 40) of said workpiece support (12) is arranged externally of said processing chamber (14), **characterised in that** at least two brackets (38) of said workpiece support (12), which are jutting out transversely on either side with respect to the direction of guidance (Z), each extend through a side wall (15) of said processing chamber (14), wherein one respective drive motor arranged externally of said processing chamber (14) is assigned to each guide member (32).

2. A machining tool according to claim 1, **characterised in that** said processing chamber (14) in the range of the passages for said brackets (38) comprises recesses (54) covered by cover means (56) arranged on said workpiece support (12).

3. Machining tool according to claim 2, **characterised in that** said cover means are sliding metal sheets (56).

4. Machining tool according to any one of claims 1 to 3, **characterised in that** said machine bed (30) comprises two bed members (44, 46) arranged at a distance from each other, wherebetween a discharging space (48) for chips is formed, and wherein one guide member (32) each is fastened on one of said bed members (44, 46), so that said workpiece support (12) spans said discharging space (48).

5. Machining tool according to claim 4, **characterised in that** said two bed members (44, 46) are connected with each other with the aid of a common baseplate (42) and/or connecting webs (52).

6. Machining tool according to any one of claims 1 to 3 and 4 or 5, **characterised by** inclined side walls extending from said cover means (56) as far as said chip removal mechanism (50).

7. Machining tool according to any one of claims 4 to 6, **characterised in that** said chip removal mechanism is a mechanical chip conveyor (50).

8. Machining tool according to any one of the preceding claims, **characterised in that** the inclination angle (α) of the side walls (15) delimiting said processing chamber (14) is at least 50 degrees.

9. Machining tool according to any one of claims 1 to 8, **characterised in that** said drive motors have the form of linear drives.

## Revendications

1. Machine-outil pour l'usinage d'une pièce à usiner (36), qui est serrée directement ou indirectement sur un porte-pièce (12), qui est guidé de manière à être déplaçable sur un banc (30) de la machine et est entourée par une chambre d'usinage (14), qui délimite une chambre de travail et à partir de laquelle des copeaux peuvent être évacués à l'aide d'un dispositif (50) d'évacuation des copeaux, le guide (32, 40) du porte-pièce (12) étant disposé à l'extérieur de la chambre d'usinage (14), **caractérisée en ce que** au moins deux bras de support (38) du porte-pièce (12), qui font saillie transversalement des deux côtés par rapport à la direction de guidage (Z), traversent respectivement une paroi latérale (15) de la chambre d'usinage (14), un moteur d'entraînement disposé à l'extérieur de la chambre d'usinage (14) étant associé à chaque guide (32).

2. Machine-outil selon la revendication 1, **caractérisée en ce que** la chambre d'usinage (14) comporte, dans la zone des traversées pour les bras de support (38), des évidements (54) qui sont recouverts par des dispositifs de recouvrement (56) disposés sur le porte-outil (12).

3. Machine-outil selon la revendication 2, **caractérisée en ce que** les dispositifs de recouvrement sont des tôles coulissantes (56).

4. Machine-outil selon l'une des revendications 1 à 3, **caractérisée en ce que** le banc (30) de la machine comporte deux corps (44, 46), qui sont situés à distance l'un de l'autre et entre lesquels est formé un espace d'évacuation (48) pour les copeaux, et dans laquelle respectivement un guide (32) est fixé sur l'un des corps (44, 46) du banc de sorte que le porte-pièce (12) recouvre l'espace d'évacuation (48).

5. Machine-outil selon la revendication 4, **caractérisé en ce que** les deux corps (44, 46) du banc sont reliés entre eux par l'intermédiaire d'une plaque de base commune (44) et/ou de nervures de liaison (52).

6. Machine-outil selon l'une des revendications 1 à 3 et 4 ou 5, **caractérisée par** des parois latérales inclinées, qui s'étendent depuis le dispositif de recouvrement (56) en direction du dispositif (50) d'évacuation de copeaux.

7. Machine-outil selon l'une des revendications 4 à 6, **caractérisée en ce que** le dispositif d'évacuation de copeaux est un dispositif mécanique (50) d'entraînement des copeaux.

8. Machine-outil selon l'une des revendications précédentes, **caractérisée en ce que** l'angle d'inclinaison (α) des parois latérales (15), qui délimitent la chambre d'usinage (14) est égal à au moins 50°.

9. Machine-outil selon l'une des revendications 1 à 8 **caractérisée en ce que** les moteurs d'entraînement sont réalisés sous la forme de dispositifs d'entraînement linéaire.
